(19) Europäisches Patentamt
European Patent Office
Office européen des brevets

(11) **EP 3 680 850 A1**

(12) **EUROPEAN PATENT APPLICATION**

(43) Date of publication:
**15.07.2020 Bulletin 2020/29**

(51) Int Cl.:
**G06Q 50/18** (2012.01)      **G06Q 40/08** (2012.01)
**G06Q 30/00** (2012.01)

(21) Application number: **20151211.8**

(22) Date of filing: **10.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.01.2019 IN 201911001462**
(71) Applicant: **Sirionlabs**
**Haryana 122018 (IN)**

(72) Inventors:
• **GUPTA, Aditya**
**122018 Haryana (IN)**
• **SHARMA, Yogesh**
**Rohtak, Haryana 124001 (IN)**

(74) Representative: **Nederlandsch Octrooibureau**
**P.O. Box 29720**
**2502 LS The Hague (NL)**

(54) **METHOD AND SYSTEM FOR DETERMINING RISK SCORE FOR A CONTRACT DOCUMENT**

(57)      A method (400) for determining a risk score for a contract document, is provided. The method includes extracting (402), by a processor (120), at least one clause from the contract document and determining (410), by the processor (120), a clause category risk score associated with a clause category of the extracted at least one clause. The clause category risk score is determined based on a clause risk score of the extracted at least one clause and a clause risk probability associated with the clause risk score of the extracted at least one clause. The method further includes determining (412), by the processor (120), the risk score for the contract document based on the clause category risk score associated with the clause category of the extracted at least one clause.

FIG. 4

EP 3 680 850 A1

**Description**

**TECHNICAL FIELD**

The present disclosure relates to methods and systems for determining a risk score for a contract document. More particularly, the present disclosure relates to methods and systems for determining a risk score for a contract document based on clause category risk scores.

**BACKGROUND**

A contract document generally plays a vital role in any business transaction between concerned parties. Apart from defining scope of work, the contract document also serves as a reference in an event of misunderstanding, complaints, or disputes between the parties. However, like any other business transaction, there is always a business risk associated with a contract. Little or no understanding of clauses mentioned in the contract document can cause miscommunication, revenue loss, increased cost, and more. Hence, it is important for the parties to estimate the magnitude of risks associated with the contract document before entering into the contract. Usually businesses employ a team of experts to review and analyse the contract document to determine risks associated with the contract document. However, the manual review of the contract documents is time consuming and it also increases the chance of making errors when there are a huge number of contract documents to be reviewed.

**SUMMARY**

This summary is provided to introduce concepts related to the present inventive subject matter. The summary is not intended to identify essential features of the claimed subject matter nor is it intended for use in determining or limiting the scope of the claimed subject matter. The embodiments described below are not intended to be exhaustive or to limit the disclosure to the precise forms disclosed in the following detailed description. Rather, the embodiments are chosen and described so that others skilled in the art may appreciate and understand the principles and practices of the present inventive subject matter.

In one aspect, the disclosure is directed towards a method for determining a risk score for a contract document. The method includes extracting, by a processor, at least one clause from the contract document and determining, by the processor, a clause category risk score associated with a clause category of the extracted at least one clause. The clause category risk score is determined based on a clause risk score of the extracted at least one clause and a clause risk probability associated with the clause risk score of the extracted at least one clause. The method further includes determining, by the processor, the risk score for the contract document based on the clause category risk score associated with the clause category of the extracted at least one clause.

In another aspect, the disclosure is directed towards a control system including an input unit and a processor. The processor is configured to extract at least one clause from a contract document and determine a clause category risk score associated with a clause category of the extracted at least one clause. The clause category risk score is determined based on a clause risk score of the extracted at least one clause and a clause risk probability associated with the clause risk score of the extracted at least one clause. The processor is further configured to determine the risk score for the contract document based on the clause category risk score associated with the clause category of the extracted at least one clause.

Numerous advantages and benefits of the inventive subject matter disclosed herein will become apparent to those of ordinary skill in the art upon reading and understanding the present specification. It is to be understood, however, that the detailed description of the various embodiments and specific examples, while indicating preferred and/or other embodiments, are given by way of illustration and not limitation. Many changes and modifications within the scope of the present disclosure may be made without departing from the spirit thereof, and the disclosure includes all such modifications.

**BRIEF DESCRIPTION OF THE FIGURES**

The accompanying figures, where like reference numerals refer to identical or functionally similar elements throughout the separate views, together with the detailed description below, are incorporated in and form part of the specification, and serve to further illustrate embodiments of concepts that include the claimed disclosure and explain various principles and advantages of those embodiments.

FIG. 1 illustrates a block diagram of an exemplary contract management system, in accordance with the embodiments of the present disclosure;

FIG. 2 illustrates an exemplary table including standard clauses and clause categories associated with the standard clauses stored in a control system of the contract management system of FIG. 1, in accordance with the embodiments of the present disclosure;

FIG. 3 illustrates an exemplary table including standard clauses, metadata, and clause risk scores associated with the standard clauses stored in the control system of the contract management system of FIG. 1, in accordance with the embodiments of the present disclosure; and

FIG. 4 illustrates an exemplary method for determining a risk score of a contract document in the contract management system of FIG. 1, in accordance with the embodiments of the present disclosure.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present disclosure.

The method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

## DETAILED DESCRIPTION

Hereinafter, the preferred embodiments of the present disclosure will be described in conjunction with the accompanying drawings, it should be understood that the preferred embodiments described herein are only used to illustrate and explain the present disclosure and are not intended to limit the present disclosure.

References to "some embodiment", "an embodiment", "at least one embodiment", "one example", "an example", "for example" and so on, indicate that the embodiment(s) or example(s) so described may include a particular feature, structure, characteristic, property, element, or limitation, but that not every embodiment or example necessarily includes that particular feature, structure, characteristic, property, element or limitation. Furthermore, repeated use of the phrase "in some embodiment" does not necessarily refer to the same embodiment.

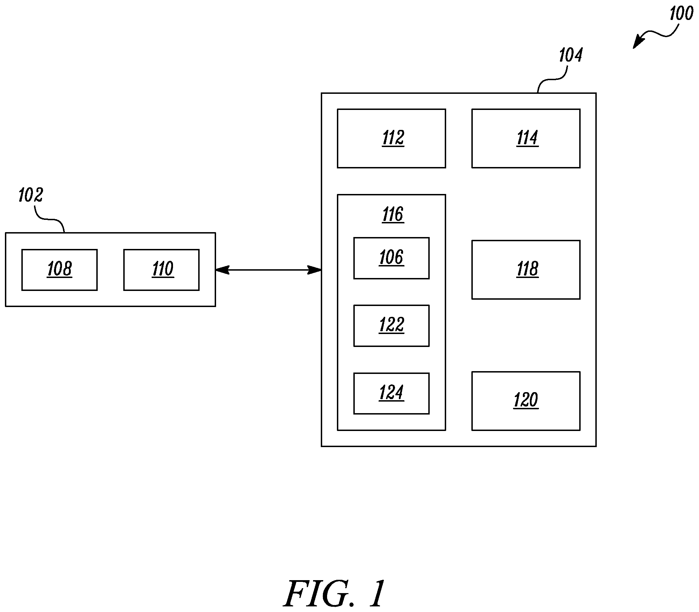

The present disclosure relates to a system and a method for determining a risk score for a contract document. FIG. 1 illustrates a block diagram of an exemplary contract management system 100 for determining a risk score for a contract document, according to various embodiments of the present disclosure. The risk score for the contract document may be hereinafter referred to as a composite risk score for the contract document. The risk score or the composite risk score for the contract document may be a number that represents a level of business risk associated with the contract document. In an example, the composite risk score of 3 may represent a lower risk associated with the contract document while a composite risk score of 9 may represent a higher risk. It may also be contemplated that these numbers are only illustrative and should not be construed as limiting in any manner. The contract document may be a hand-written and/or an electronic document drafted on a counterparty paper or any other standard/non-standard paper. The contract document may include multiple clauses related to various clause categories including, but not limited to, termination, confidentiality, term, compensation, compliance, restrictions, damages, etc.

The contract management system 100 depicted in FIG. 1 may be implemented in any suitable computing environment, such as one or more of, a desktop or a laptop computer, a computer server, or a mobile computing device, such as a mobile phone, a Personal Digital Assistant (PDA), or a smart phone. In addition, the contract management system 100 may be combined into fewer systems than shown or divided into more systems than shown. The communications links depicted in FIG. 1 may be through wired or wireless connections and may be a part of a secured network, such as a local area network (LAN) and/or a combination of networks, such as LANs, WANs, MANs and/or the Internet.

The contract management system 100 may include an input data source 102 and a control system 104. The input data source 102 may be configured to receive a contract document from a user and transmit the contract document to the control system 104. The input data source 102 may be further configured to receive the composite risk score for the contract document that is determined by the control system 104. The input data source 102 may also be configured to receive one or more standard clauses identified by the control system 104. The user may refer to the received one or more standard clauses to make changes in one or more clauses of the contract document, for example, to reduce the level of business risk associated with the contract document. The input data source 102 may be a mobile phone, a tablet or any other communication device configured to receive the contract document. The input data source 102 may include an input unit 108 and an output unit 110. The input unit 108 may be a keypad, a touchpad, a scanner, a camera or any other input device configured to receive inputs from the user. The output unit 110 may be a display device or any other output device configured to display the composite risk score and/or the standard clauses.

The control system 104 may be configured to receive the contract document from the input data source 102 and determine the composite risk score for the contract document. In an alternative implementation, the control system 104 may also be configured to receive the contract document from any other device and/or a combination of one or more of the input data source 102 and other device(s). The control system 104 may be configured to transmit the composite risk score and/or the standard clauses to the input data source 102 or any other device. The control system 104 may be a centralized system (which may be implemented on a server or a cloud server, etc.) connected to the various other components of the contract management system 100 via a network (not shown), such as internet or intranet, etc. The control system 104 may include suitable logic, circuitry, and/or interfaces that are configured to control the various operations of the contract management system 100.

The control system 104 may include an Input/Output unit 112 (hereinafter interchangeably referred to as I/O unit 112, input unit 112, or output unit 112), a communication unit 114, a memory unit 116, a machine learning engine 118, and a processor 120. The I/O unit 112 may be configured to communicate with the input data source 102 via the communication unit 114, to receive the contract document. The I/O unit 112 may further communicate with the input data source 102 via the communication unit 114, to transmit the composite risk score and/or the standard clauses. The communication unit 114 may include a modem, an ethernet card, or other similar devices, that enable the control system 104 to connect to the various components of the contract management system 100.

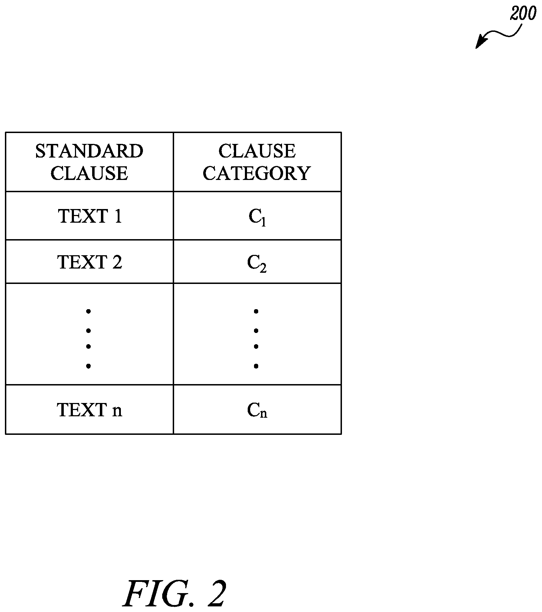

The memory unit 116 may be configured to store a set of instructions that are executable by the processor 120 to perform the predetermined operations. The memory unit 116 may further be configured to store a clause library 106 that may include a plurality of standard clauses and corresponding clause categories assigned to each of the plurality of standard clauses. In one example, the standard clauses may include clauses that are commonly used in various contract documents. In another example, the standard clauses may include clauses that have been previously used in various contract documents. Further, a clause category of a clause and/or a standard clause is indicative of whether the clause / standard clause classifies as one or more of a termination clause, confidentiality clause, term clause, compensation clause, compliance clause, restrictions clause, damages clause, and so on. It may be contemplated that these clause categories are merely exemplary and may be well altered without altering the scope of the claimed subject matter. The plurality of standard clauses and their corresponding clause categories may be stored in form of a table 200 (as shown in FIG. 2) or any other format suitable for storage of such data. In some embodiments, the plurality of standard clauses and their corresponding clause categories may be used as a training set for the machine learning engine 118.

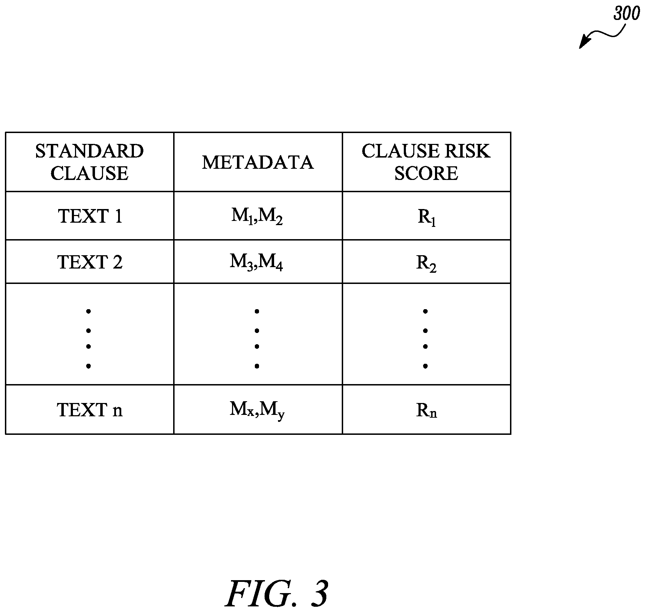

The clause library 106 may further include a table 300 (as shown in FIG. 3) including plurality of standard clauses and the corresponding clause risk scores assigned to each of the plurality of standard clauses. In an exemplary implementation, the clause risk score of a clause and/or a standard clause may be a number or a percentage score, or the like, that represents a level of business risk associated with that clause. In an embodiment, the table 300 may additionally include metadata associated with each of the plurality of standard clauses. The metadata may represent information associated with various attributes of a clause. In an exemplary embodiment, the attributes may include service name, frequency, termination, etc. In accordance with various embodiments of the present disclosure, the clause risk score defined in table 300 may be defined by a user depending upon a text and the metadata of the corresponding standard clause. Further, the plurality of standard clauses, the metadata, and the clause risk scores stored in the table 300 may be used as a training set for the machine learning engine 118.

The clause library 106 may further include weightages defined for various clause categories (hereinafter referred to as category weightage) that may be present in a standard contract document. The category weightage may be a number or a percentage score, or the like, that represents a weightage assigned to a clause category for computation of the composite risk score associated with the contract document. In accordance with various embodiments, different category weightages may be assigned to different clause categories based on the significance of the clause categories. For example, the clause categories, such as termination and damages, having higher significance may be assigned higher category weightages as compared to other clause categories, for example, confidentiality, in the contract document. In an embodiment, the category weightages may be defined and updated by the user of the contract management system 100. The memory unit 116 may be further configured to store one or more machine learning models 122 and one or more machine learning algorithms 124 for/as part of the machine learning engine 118. The memory unit 116 may include, but is not limited to, a Random-Access Memory (RAM), a Read Only Memory (ROM), a Hard Disk Drive (HDD), and a Secure Digital (SD) card.

The machine learning engine 118 may be configured to determine a clause category, a clause category probability, a clause risk score, and a clause risk probability associated with each clause in the contract document. The clause category probability associated with the clause category may be a percentage that represents a degree of match of a clause in the contract document with a relevant standard clause stored in the table 200. Further, the clause risk probability associated with the clause risk score may be a percentage or a like that may be indicative of a degree of match of a clause in the contract document with a relevant standard clause stored in the table 300.

The machine learning engine 118 may be configured to run the one or more machine learning algorithms 124 on the training sets (e.g., the tables 200 and 300) to build the one or more machine learning models 122. The one or more machine learning models 122 may be further used for the determination of the clause category, the clause category probability, the clause risk score and the clause risk probability associated with each clause in the contract document. In an embodiment, the machine learning engine 118 may be configured to run the one or more machine learning algorithms 124 on the training set stored in the table 200 of the clause library 106 to build a machine learning model for the determination of the clause category and the clause category probability associated with a clause in the contract document. Similarly, the machine learning engine 118 may be configured to run the one or more machine learning algorithms 124 on the training set stored in the table 300 of the clause library 106 to build another machine learning model for the determination of the clause risk score and the clause risk probability associated with a clause in the contract document. For the sake of clarity, the machine learning model for determination of the clause category and the clause category probability and the machine learning model for determination of the clause risk score and the clause risk probability may be hereinafter referred to as the one or more machine learning models 122. In some embodiments, the one or more machine learning algorithms 124 and the one or more machine learning models 122 may be stored remotely with respect to the control system 104 in any other computing device.

For the sake of brevity of the disclosure, the forthcoming disclosure will primarily include discussions towards determination of the clause category, the clause category probability, the clause risk score, and the clause risk probability associated with a clause in the contract document. However, these discussions may be applied to determine the clause category, the clause category probability, the clause risk score, and the clause risk probability associated with each and every clause in the contract document.

For the determination of the clause category of a clause in the contract document, the machine learning engine 118 may be configured to run the one or more machine learning models 122 to identify a relevant standard clause from the table 200 of the clause library 106. The relevant standard clause is determined based on a machine learning based statistical classification of a text of the clause in the contract document. The machine learning based statistical classification is well known in the art, the specifics of which need not be described in detail herein. The machine learning engine 118 may be configured to run the one or more machine learning models 122 to determine the clause category of the relevant standard clause defined in the table 200 and accordingly the clause category of the clause in the contract document. In other words, the clause category of the relevant standard clause may be assigned as the clause category of the clause in the contract document. In accordance with various embodiments, the machine learning engine 118 may be configured to run the one or more machine learning models 122 to determine the clause category for any new, similar, or modified version of a standard clause stored in the table 200 of the clause library 106 in a similar manner.

The machine learning engine 118 may be configured to run the one or more machine learning models 122 to determine a clause category probability associated with the clause category of the clause in the contract document. The clause category probability associated with the clause category of the clause depends upon a degree of match between the text of the clause in the contract document and the text of the relevant standard clause stored in the table 200.

The machine learning engine 118 may be configured to run the one or more machine learning models 122 to extract metadata associated with the clause. The metadata may be extracted from the clause based on the clause category associated with the clause in the contract document. In an exemplary embodiment, the extracted metadata may include one or more of termination date, termination amount, etc., from a clause when the clause category is identified to be termination.

In accordance with various embodiments, for the determination of the clause risk score of the clause in the contract document, the machine learning engine 118 may be configured to run the one or more machine learning models 122 to determine a relevant standard clause in the table 300 of the clause library 106 based on a comparison of (i) the text of the clause in the contract document with the text of standard clauses in the table 300 and (ii) the extracted metadata of the clause with the metadata of standard clauses in the table 300 of the clause library 106. In an embodiment, the relevant standard clause in the table 300 may be based on a probabilistic match of (i) the text of the clause in the contract document with the text of standard clauses in the table 300 and (ii) the extracted metadata of the clause with the metadata of standard clauses in the table 300 of the clause library 106. The machine learning engine 118 may be configured to run the one or more machine learning models 122 to determine the clause risk score of the relevant standard clause defined in the table 300 as the clause risk score of the clause in the contract document. Further, it may be contemplated that the one or more machine learning models 122 may also be configured to determine the clause risk score for any new, similar, or modified version of a standard clause stored in the table 300 in a similar manner.

The machine learning engine 118 may be configured to run the one or more machine learning models 122 to determine a clause risk probability associated with the clause risk score of the clause in the contract document. In an embodiment, the clause risk probability associated with the clause risk score of a clause depends upon a degree of match between the text of the clause and the text of the relevant standard clause stored in the table 300.

The machine learning engine 118 may be configured to run the one or more machine learning models 122 to determine the clause category, the clause category probability, the clause risk score, and the clause risk probability associated with each clause in the contract document. The machine learning engine 118 may further be configured to monitor performance of one or more clauses in the contract document using the one or more machine learning algorithms 124 and continuously update the one or more machine learning models 122 based on the monitored performance. In an embodiment, the one or more machine learning models 122 may further be updated by adding more training data in the clause library 106. The continuous upgradation of the one or more machine learning models 122 results in achieving accurate results based on the latest training data. The one or more machine learning algorithms 124 are well known in the art, the specifics of which need not be described in detail herein. Any suitable machine learning algorithm 124 may be used in the context of the embodiments. While the machine learning engine 118 is depicted as a part of the control system 104, it may be implemented as a system separate from the control system 104 that communicates with the control system 104 through wired or wireless connections. Alternatively, the machine learning engine 118 may be implemented as a part of the processor 120.

The processor 120 may be configured to determine the composite risk score for the contract document. The processor 120 may include one or more microprocessors, microcontrollers, DSPs (digital signal processors), state machines, logic circuitry, or any other device or devices that process information based on operational or programming instructions. The processor 120 may be implemented using one or more controller technologies, such as Application Specific Integrated Circuit (ASIC), Reduced Instruction Set Computing (RISC) technology, Complex Instruction Set Computing (CISC) technology, etc. The processor 120 may be configured to execute the instructions stored in the memory unit 116 to perform the predetermined operations.

The contract document received from the input data source 102 via the I/O unit 112 may be further processed by the processor 120. The processor 120 may be configured to extract one or more clauses from the contract document, by using probabilistic match score algorithm and/or other text recognition techniques well-known in the art. In accordance with some embodiments, the processor 120 may also be configured to digitize the contract document, using Optical Character Recognition (OCR) technique and/or other text recognition techniques, when the contract document is a hand-written contract document.

The processor 120 may be configured to categorize each clause in the contract document based on the clause category and determine a clause category risk score associated with each clause category present in the contract document. In an example, the processor 120 may categorize all clauses belonging to a termination category and determine clause risk score associated with the termination category. The clause category risk score associated with a clause category is determined based on the clause risk scores and the clause risk probabilities of one or more clauses belonging to the clause category in the contract document. In the example considered above, the clause category risk score associated with the termination category is determined based on individual clause risk scores and the clause risk probabilities of all clauses categorized under the termination category in the contract document. The clause category risk score associated with other categories such as insurance, damages, etc., present in the contract document may be determined in a similar manner. In other words, the processor 120 may be configured to determine the clause category risk score for a clause category having n number of clauses in the contract document using the below formula:

$$\text{Clause Category Risk Score} = \frac{\sum_{i}^{n}(Clause\ Risk\ score_i * Clause\ Risk\ Probability_i)}{n}$$

Upon determining the clause category risk score associated with each clause category present in the contract document, the processor 120 may be further configured to determine a composite risk score for the contract document. The composite risk score for the contract document can be determined based on the clause category risk score and the category weightage of each clause category in the contract document. In the example discussed above, when the contract document includes clauses belonging to clause categories such as termination, insurance, and damages, the composite risk score for the contract document may be determined based on the clause category risk scores and category weightages associated with each of the termination, insurance and damages types of clause categories. The category weightage associated with each category clause may be stored in the memory unit 116. In other words, the processor 120 may be configured to determine the composite risk score for the contract document containing n number of clause categories using the below formula:

$$\text{Composite Risk score} = \frac{\sum_{i}^{n}(Clause\ Category\ Risk\ score_i * Category\ Weightage_i)}{n}$$

The determination of the composite risk score for the contract document based on the category weightage improves the accuracy of the composite risk score by assigning more weightage to the significant categories as compared to the other non-significant categories.

The processor 120 may be configured to transmit the composite risk score for the contract document to the input data source 102 via the I/O unit 112. In various embodiments, the processor 120 may be configured to identify one or more relevant standard clauses from the clause library 106 belonging to the clause categories present in the contract document and transmit it to the input data source 102 via the I/O unit 112 to facilitate replacements/edits in the contract document for the user. In an embodiment, the one or more relevant standard clauses transmitted to the input data source 102 may include clauses with clause risk score below a threshold value. Therefore, the one or more relevant standard clauses may be referred to by the user to make edits to the clauses of the contract document, for example, to reduce the level of business risk (represented by the composite risk score) associated with the contract document.

Industrial Applicability

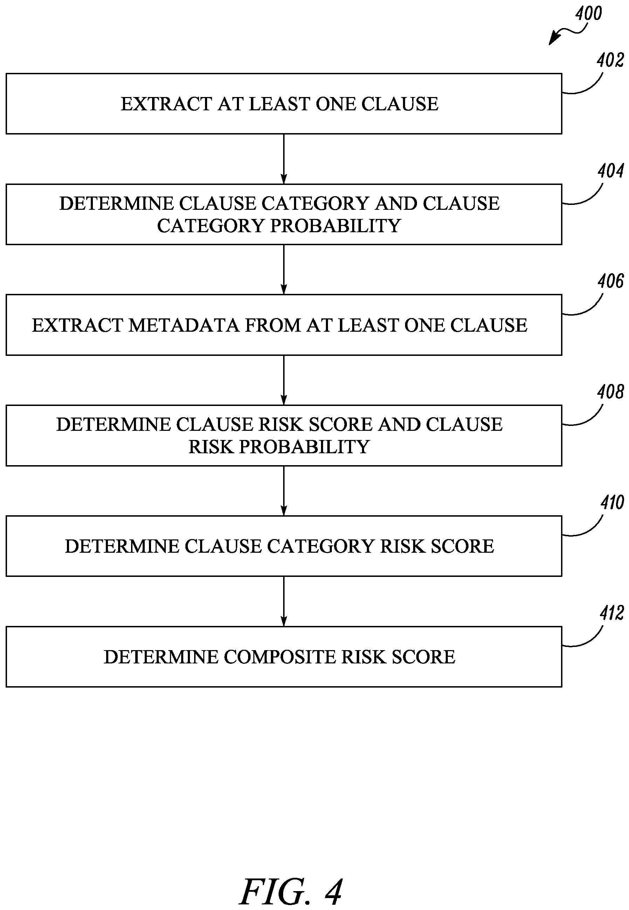

FIG. 4 illustrates an exemplary method 400 for determining composite risk score for a contract document, in accordance with the concepts of the present disclosure. The method 400 is performed by the contract management system 100 of the present disclosure. For the sake of brevity of the disclosure, the forthcoming disclosure will primarily include discussions towards determination of the clause category, the clause category probability, the clause risk score, and the clause risk probability associated with a clause in the contract document. However, these discussions may be applied to determine the clause category, the clause category probability, the clause risk score, and the clause risk probability associated with each and every clause in the contract document.

Initially, the processor 120 receives the contract document from the input data source 102 via the I/O unit 112 and extracts at least one clause from the contract document at step 402. The at least one clause in the contract document is extracted by using the probabilistic match score algorithm and/or any other text recognition techniques. In an embodiment, the processor 120 digitizes the contract document when the contract document is a hand-written contract document.

Further, at step 404, the machine learning engine 118 determines the clause category and the clause category probability associated with the clause category of the at least one clause. The machine learning engine 118 identifies the relevant standard clause based on the machine learning based statistical classification of the text of the at least one clause. The machine learning engine 118 further determines the clause category of the relevant standard clause defined in the table 200 and accordingly the clause category of the at least one clause.

The machine learning engine 118 further determines the clause category probability associated with the clause category of the at least one clause. In an embodiment, the clause category probability associated with the clause category of the at least one clause depends upon the degree of the match between the text of the at least one clause and the text of the relevant standard clause stored in the table 200 of the clause library 106.

At step 406, the machine learning engine 118 extracts metadata associated with the at least one clause based on the clause category of the at least one clause.

At step 408, the machine learning engine 118 determines the clause risk score and the clause risk probability associated with the at least one clause. The machine learning engine 118 determines a relevant standard clause in the table 300 of the clause library 106 based on a comparison of (i) the text of the clause in the contract document with the text of standard clauses in the table 300 and (ii) the extracted metadata of the clause with the metadata of standard clauses in the table 300 of the clause library 106. The machine learning engine 118 further determines the clause risk score of the relevant standard clause defined in the table 300 as the clause risk score of the at least one clause.

The machine learning engine 118 further determines the clause risk probability associated with the clause risk score for the at least one clause. In accordance with various embodiments of the present disclosure, the clause risk probability associated with the clause risk score of the at least one clause in the contract document depends upon the degree of the match between the text of the at least one clause in the contract document and the text of the relevant standard clause stored in the clause library 106.

Further, at step 410, the processor 120 determines a clause category risk score associated with a clause category of the at least one clause. In an embodiment, the clause category risk score associated with the clause category of the at least one clause is determined based on the clause risk score and the clause risk probability associated with the at least one clause along with the clause risk scores and the clause risk probabilities of other clauses belonging to the same clause category in the contract document. The processor 120 determines the clause category risk score for a clause category having n number of clauses in the contract document using the below formula:

$$\text{Clause Category Risk Score} = \frac{\sum_{i}^{n}(Clause\ Risk\ score_i * Clause\ Risk\ Probability_i)}{n}$$

At step 412, the processor 120 determines a composite risk score for the contract document based on the clause category risk score and the category weightage associated with the clause category of the at least one clause in the contract document. In an embodiment, the processor 120 determines the composite risk score for the contract document based on clause category risk scores and category weightages of each clause category present in the contract document. The composite risk score for the contract document containing n number of categories is determined using the below formula:

$$\text{Composite Risk score} = \frac{\sum_{i}^{n}(Clause\ Category\ Risk\ score_i * Category\ Weightage_i)}{n}$$

In accordance with various embodiments of the present disclosure, the processor 120 transmits the composite risk score for the contract document to the input data source 102 via the I/O unit 112. The processor 120 also identifies one or more relevant standard clauses from the clause library 106 belonging to the clause categories present in the contract document and transmits it to the input data source 102 via the I/O unit 112 to facilitate replacements/edits in the contract document for the user.

The contract management system 100 of the present disclosure determines a composite risk score for a contract document based on the clause category risk scores and the category weightages of clause categories present in the contract document. The determination of the composite risk score of the contract document at the clause category level enables the system to accurately assess the risk level of the contract document considering the weightage associated with each category. In fact, the weightages can also be assigned by the user resulting in the determination of the composite risk score as per user's preferences.

Moreover, the contract management system 100 of the present disclosure utilizes the machine learning engine 118 that can easily identify trends and patterns in large volumes of data (such as training sets stored in the memory unit 116) that would otherwise not be apparent to humans. The identified trends and patterns from the large volumes of data increases the ability of the machine learning engine 118 to deliver accurate risk scores. Further, the machine learning engine 118 continuously updates the machine learning models 122 with new training data sets that further increases the relevancy and the accuracy of the determined risk scores. Additionally, the consideration of metadata such as numbers, timelines, amount, etc., for the determination of the clause risk scores enables the contract management system 100 to further increase the accuracy of the risk score at the clause level. The control system 104 also allows the user to reduce the business risk level associated with the contract document by displaying relevant standard clauses to the user for making edits/replacements.

A person having ordinary skills in the art will appreciate that the system, modules, and sub-modules have been illustrated and explained to serve as examples and should not be considered limiting in any manner. It will be further appreciated that the variants of the above disclosed system elements, or modules and other features and functions, or alternatives thereof, may be combined to create other different systems or applications.

Those skilled in the art will appreciate that any of the aforementioned steps and/or system modules may be suitably replaced, reordered, or removed, and additional steps and/or system modules may be inserted, depending on the needs of a particular application. In addition, the systems of the aforementioned embodiments may be implemented using a wide variety of suitable processes and system modules and is not limited to any particular computer hardware, software, middleware, firmware, microcode, or the like.

The claims can encompass embodiments for hardware, software, or a combination thereof. It will be appreciated that variants of the above disclosed, and other features and functions or alternatives thereof, may be combined into many other different systems or applications. Presently unforeseen or unanticipated alternatives, modifications, variations, or improvements therein may be subsequently made by those skilled in the art, which are also intended to be encompassed by the following claims.

While aspects of the present disclosure have been particularly shown, and described with reference to the embodiments above, it will be understood by those skilled in the art that various additional embodiments may be contemplated by the modification of the disclosed machines, systems, and methods without departing from the spirit and scope of what is disclosed. Such embodiments should be understood to fall within the scope of the present disclosure as determined based upon the claims and any equivalents thereof.

**Claims**

1. A method (400) for determining a risk score for a contract document, the method (400) comprising:

   extracting (402), by a processor (120), at least one clause from the contract document;
   determining (410), by the processor (120), a clause category risk score associated with a clause category of the extracted at least one clause, wherein the clause category risk score is determined based on a clause risk score of the extracted at least one clause and a clause risk probability associated with the clause risk score of the extracted at least one clause; and
   determining (412), by the processor (120), the risk score for the contract document based on the clause category risk score associated with the clause category of the extracted at least one clause.

**2.** The method (400) as claimed in claim 1, further comprising:
determining (404), by a machine learning engine (118), a clause category and a clause category probability associated with the clause category of the extracted at least one clause, wherein the clause category is determined based on a machine learning based statistical classification of a text of the extracted at least one clause.

**3.** The method (400) as claimed in claim 2, further comprising:
extracting (406), by the machine learning engine (118), metadata associated with the extracted at least one clause based on the clause category of the extracted at least one clause.

**4.** The method (400) as claimed in claim 3, further comprising:
determining (408), by the machine learning engine (118), the clause risk score of the at least one clause and the clause risk probability associated with the clause risk score of the extracted at least one clause.

**5.** The method as claimed in claim 1, wherein determining (412), by the processor (120), the risk score for the contract document further comprises determining the risk score based on weightage of the clause category of the extracted at least one clause.

**6.** A control system (104) for determining a risk score for a contract document, the control system (104) comprising:

an input unit (112) configured to receive the contract document;
a processor (120) communicably coupled to the input unit (112), the processor (120) configured to:

extract at least one clause from the contract document;
determine a clause category risk score associated with a clause category of the extracted at least one clause, wherein the clause category risk score is determined based on a clause risk score of the extracted at least one clause and a clause risk probability associated with the clause risk score of the extracted at least one clause; and
determine the risk score for the contract document based on the clause category risk score associated with the clause category of the extracted at least one clause.

**7.** The control system (104) as claimed in claim 6, further includes:
a machine learning engine (118) configured to determine a clause category and a clause category probability associated with the clause category of the extracted at least one clause, wherein the clause category is determined based on a machine learning based statistical classification of a text of the extracted at least one clause.

**8.** The control system (104) as claimed in claim 7, wherein the machine learning engine (118) is configured to:
extract metadata associated with the extracted at least one clause based on the clause category of the extracted at least one clause.

**9.** The control system (104) as claimed in claim 8, wherein the machine learning engine (118) is configured to:
determine the clause risk score of the extracted at least one clause and the clause risk probability associated with the clause risk score of the extracted at least one clause.

**10.** The control system (104) as claimed in claim 6, wherein the processor (120) is configured to determine the risk score for the contract document based on weightage of the clause category of the extracted at least one clause.

*FIG. 1*

200

| STANDARD CLAUSE | CLAUSE CATEGORY |
|:---:|:---:|
| TEXT 1 | $C_1$ |
| TEXT 2 | $C_2$ |
| ⋮ | ⋮ |
| TEXT n | $C_n$ |

*FIG. 2*

| STANDARD CLAUSE | METADATA | CLAUSE RISK SCORE |
|---|---|---|
| TEXT 1 | $M_1,M_2$ | $R_1$ |
| TEXT 2 | $M_3,M_4$ | $R_2$ |
| . . . . | . . . . | . . . . |
| TEXT n | $M_x,M_y$ | $R_n$ |

*FIG. 3*

*400*

*402*

EXTRACT AT LEAST ONE CLAUSE

*404*

DETERMINE CLAUSE CATEGORY AND CLAUSE
CATEGORY PROBABILITY

*406*

EXTRACT METADATA FROM AT LEAST ONE CLAUSE

*408*

DETERMINE CLAUSE RISK SCORE AND CLAUSE
RISK PROBABILITY

*410*

DETERMINE CLAUSE CATEGORY RISK SCORE

*412*

DETERMINE COMPOSITE RISK SCORE

*FIG. 4*

Europäisches
Patentamt

European
Patent Office

Office européen
des brevets

# EUROPEAN SEARCH REPORT

Application Number

EP 20 15 1211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 162 850 B1 (JAIN AMITABH [IN] ET AL) 25 December 2018 (2018-12-25) * abstract * * column 4, lines 15-20 * * column 1, line 12 - column 1, line 46 * * column 2, line 27 - column 32, line 57 * ----- | 1-10 | INV. G06Q50/18 G06Q40/08 G06Q30/00 |
| X | US 2018/268506 A1 (WODETZKI JAMIE [US] ET AL) 20 September 2018 (2018-09-20) * abstract * * paragraph [0020] - paragraph [0021] * * paragraph [0002] - paragraph [0035] * * paragraph [0058] - paragraph [0160] * ----- | 1-10 | |
| X | US 8 788 523 B2 (MARTIN KINGSLEY [US]; LIGGETT TRACE [US] ET AL.) 22 July 2014 (2014-07-22) * abstract * * column 1, line 27 - column 1, line 61 * * column 2, line 41 - column 8, line 42 * ----- | 1-10 | |
| A | US 2015/106276 A1 (CLARK THORFINN [US] ET AL) 16 April 2015 (2015-04-16) * the whole document * ----- | 1-10 | TECHNICAL FIELDS SEARCHED (IPC) G06Q |
| A | US 2017/103466 A1 (SYED NAYEEM [GB]) 13 April 2017 (2017-04-13) * the whole document * ----- | 1-10 | |

The present search report has been drawn up for all claims

| Place of search | Date of completion of the search | Examiner |
|---|---|---|
| The Hague | 27 February 2020 | Peelen, Bastien |

EPO FORM 1503 03.82 (P04C01)

**ANNEX TO THE EUROPEAN SEARCH REPORT
ON EUROPEAN PATENT APPLICATION NO.**

EP 20 15 1211

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2020

| Patent document cited in search report | | Publication date | Patent family member(s) | | Publication date |
|---|---|---|---|---|---|
| US 10162850 | B1 | 25-12-2018 | US 10162850 B1<br>US 10409805 B1<br>WO 2019200014 A1 | | 25-12-2018<br>10-09-2019<br>17-10-2019 |
| US 2018268506 | A1 | 20-09-2018 | US 2018268506 A1<br>WO 2018170321 A1 | | 20-09-2018<br>20-09-2018 |
| US 8788523 | B2 | 22-07-2014 | US 2011055206 A1<br>US 2015112877 A1 | | 03-03-2011<br>23-04-2015 |
| US 2015106276 | A1 | 16-04-2015 | NONE | | |
| US 2017103466 | A1 | 13-04-2017 | AU 2016340241 A1<br>AU 2020200800 A1<br>CA 3001323 A1<br>GB 2557833 A<br>US 2017103466 A1<br>WO 2017066370 A1 | | 26-04-2018<br>20-02-2020<br>20-04-2017<br>27-06-2018<br>13-04-2017<br>20-04-2017 |

For more details about this annex : see Official Journal of the European Patent Office, No. 12/82